(19) Europäisches Patentamt
European Patent Office
Office européen des brevets

(11) Publication number: **0 127 181**
**B1**

(12) **EUROPEAN PATENT SPECIFICATION**

(45) Date of publication of patent specification: **27.09.89**

(21) Application number: **84106145.0**

(22) Date of filing: **29.05.84**

(51) Int. Cl.[4]: **C 08 L 67/06**, C 08 L 31/08, C 08 L 63/00, C 08 F 299/04, C 08 G 59/40, C 08 K 5/14, C 08 G 18/22, C 08 G 18/76, C 08 L 63/10, C 08 F 299/02, C 08 F 263/08

(54) **Resin composition.**

(30) Priority: **30.05.83 JP 95314/83**
**30.05.83 JP 95315/83**
**30.05.83 JP 95316/83**
**30.05.83 JP 95317/83**

(43) Date of publication of application:
**05.12.84 Bulletin 84/49**

(45) Publication of the grant of the patent:
**27.09.89 Bulletin 89/39**

(84) Designated Contracting States:
**DE FR GB IT NL**

(56) References cited:
**CH-A- 371 897**
**DE-B-1 246 234**
**US-A-3 516 955**
**US-A-3 637 618**
**US-A-3 795 657**
**US-A-3 849 366**
**PATENT ABSTRACTS OF JAPAN, unexamined applications, Field C, vol. 4, no. 178, 10. December 1980, THE PATENT OFFICE JAPANESE GOVERNMENT, p. 76 C 34**

**The file contains technical information submitted after the application was filed and not included in this specification**

(73) Proprietor: **MITSUBISHI RAYON CO. LTD.**
**3-19, Kyobashi 2-chome Chuo-Ku**
**Tokyo 104 (JP)**

(72) Inventor: **Tada, Hisashi**
**2-511 Lions Mansion Nekogahora 1-1 Nekogahoradori**
**2-chome Chikusa-ku Nagoya (JP)**
Inventor: **Saruta, Masahiro**
**306-go Teraodaini Corpo. 1-1014 Amakoda**
**Moriyama-ku, Nagoya (JP)**
Inventor: **Moriishi, Hideki**
**310-go, Shinpokawai Bldg. 4-1 Shinpo-cho-4-chome**
**Chikusa-ku Nagoya (JP)**
Inventor: **Matsumoto, Tsuruyoshi**
**2-1, Kurokawa-3-chome**
**Ohtake-shi (JP)**

(74) Representative: **Patentanwälte TER MEER - MÜLLER - STEINMEISTER**
**Mauerkircherstrasse 45**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 127 181 B1

**Description**

This invention relates to a resin composition excellent in quick curability accompanied with reduced heat of curing, storage stability and in adhesive strength.

Resins of the radical-polymerization type such as unsaturated polyester resins, vinyl ester resins and diallyl phthalate resins have been known to form a resin composition of excellent curability and are widely used especially in the field of fiber-reinforced plastics (FRP). Although excellent in quick curability, these resin compositions have disadvantages in that they give a cured product of inferior toughness and insufficient adhesive strength. For the purpose of improving these properties, there have been known various attempts including an example in which the terminal group is converted into a carboxyl or hydroxyl group and a mixture of the resulting resin with an epoxy resin is cured in the presence of an acid anhydride and another example of which use is made of a composition comprising an unsaturated polyester resin and a mixture of curing agents comprising maleic anhydride, an epoxy resin and an imidazole compound. Although such combinations result in a certain degree of improvement, yet they exhibit a disadvantage of low rate of curing because the reaction between an acid anhydride and an epoxy resin is a rate-controlling factor for the curing. Furtheron, there was an example of the use of unsaturated polyester and its catalyst with epoxy resin and its harden catalyst in combination for the purpose of improving adhesiveness and quick curability. However, its storage stability is poor and thus there was a problem in practical use.

In US—PS 3 516 955 a curable composition is described containing an unsaturated polyester, a vinyl monomer, a peroxide catalyst, epoxy components and a curing agent. The composition disclosed shows a tack-free state even at room temperature. As it can be taken from example III of the reference cited the Sward hardness reaches 24 after 25 hours at room temperature which is a very poor storage stability. From US—PS 3 637 618 curable polyester compositions are known comprising a mixture of a soluble, curable unsaturated polyester of a normally liquid polyepoxide and an ethylenically unsaturated organic carboxylic acid and a dissimilar normally solid polymeric material possessing a plurality of epoxy groups.

Said polyester compositions have a controlled viscosity which impart improved chemical resistance to glass reinforced structures. In US—PS 3 849 366 a storage stable, one-component epoxide composition containing a readily curable, thixotropic mixture of a polyepoxide compound a latent curing agent, an accelerator, a thixotropic agent and a filler is described. This epoxy resin composition has to be considered as a solely one-component composition. The epoxy-resin composition is based upon a dihydric phenol(bisphenol A), a dicyandiamide curing agent and a monuron accelerator. In US—PS 3 795 657 epoxy resin compositions are described containing aromatic guanides as latent curing agents therefore. These latent curing agents will cure epoxy resins with or without accelerators or shorter times than accelerated dicyandiamide cured systems and at lower temperatures than unaccelerated dicyandiamide systems. The present inventors made an extensive study on the resin composition which is satisfactory in both the quick curability, storage stability and the adhesive strength and, as a result, have accomplished the present invention. In addition, the resin composition according to the present invention generated a reduced amount of the heat of curing.

The object of the invention is a resin composition whose resin forming components comprise (I) at least one compound selected from the group consisting of (A) unsaturated polyesters containing hydroxyl groups which is a polyester of a dibasic carboxylic acid and a hydroxy compound wherein at least a portion of the dibasic carboxylic acid component is an unsaturated dibasic carboxylic acid, and (B) reaction products of polyepoxides and ethylenically unsaturated carboxylic acids in a ratio of 1:0.5 to 1:11 of epoxy groups to carboxylic acid groups using LiCl as a reaction catalyst; (II) at least one monomer copolymerizable with said compound (I) which is selected from the group consisting of ethylenically unsaturated monomers and unsaturated allylic monomers; (III) a peroxide catalyst for the copolymerization of compounds (I) and (II); (IV) at least one compound containing at least one oxirane ring; (V) a curing agent (excluding acid anhydrides, acids and amine compounds) capable of curing said orxirane compound (IV) selected from the group consisting of the guanidines, such as a dicyandiamide, 2,6-xylenylbiguanide, o-tolyl biguanide, diphenylguanidine and dihydrazides, such as adipyl dihydrazide and azelayl dihydrazide; and (VI) a catalyst for the reaction of the components (IV) and (V) or the homopolymerizsation of component (IV) selected from the reaction products of dimethylamine and phenyl isocyanates.

The present invention also provides a resin composition excellent in quick curability, adhesive strength and storage stability, comprising (VII); a polyisocyanate compound and (VIII) a promoter for the reaction between the isocyanate group and the hydroxyl group, in addition to the components of the above-mentioned resin composition.

As the unsaturated polyesters (A) for use in the present composition, mention may be made of those prepared from the known raw materials by the known methods, such as those containing hydroxyl group, which are obtained by the dehydration condensation from unsaturated dibasic carboxylic acids (e.g. fumaric acid and maleic acid) or anhydride thereof, saturated dibasic carboxylic acids or anhydrides thereof (e.g. phthalic acid, isophthalic acid, adipic acid, phthalic anhydride, succinic anhydride, tetrahydrophthalic anhydride, and hexahydrophthalic anhydride), and glycol components such as diethylene glycol, propylene glycol, neopentyl glycol, butanediol, hydrogenated bisphenol A, and 2,2-di-(4-hydroxypropoxyphenol)propane. An unsaturated polyester obtained from maleic acid and phthalic acid or a derivative of them is preferably used.

The polyepoxides used in the reaction with an ethylenically unsaturated carboxylic acid to form the reaction product (B) are limited to no special species. As examples of suitable polyepoxides, mention may be made of polyglycidyl ethers of diphenylolalkanes such as diphenylolpropane, diphenylolethane, and diphenylolmethane; polyglycidyl ethers of polyhydric phenols such as novolak and resol; polyglycidyl ethers of p-aminophenol, m-aminophenol, and of polyamides such as 4, 4'-di-aminodiphenylmethane; epoxy resins produced by the epoxyidation of alicyclic compounds such as cyclohexene, cyclopentadiene, and dicyclopentadiene; poly(epoxyalkyl)ethers of aliphatic polyepoxy compounds such as 3,4-epoxy-6-methylcyclohexanecarboxylic acid methyl ester, ethylene glycol, and glycerol; and glycidyl esters of aromatic and aliphatic carboxylic acids. Intermediate reaction products of these polyepoxides and an amine compound or a carboxylic acid anhydride may also be used.

As examples of ethylenically unsaturated carboxylic acids, mention may be made of methacrylic acid, acrylic acid, and crotonic acid. In the reaction between a polyepoxide and an ethylenically unsaturated carboxylic acid, the molar ratio between the epoxy group and the carboxylic acid is preferably from 1:0.5 to 1:1.1. The reaction can be carried out by a known procedure (for example, the procedure described in Japanese Patent Publication No. 31,472/69). It is quite feasible to use a combination of the compounds (A) and (B).

As the ethylenically unsaturated monomers or allylic unsaturated monomers, mention may be made of styrene derivatives such as styrene, vinyltoluene, and chlorostyrene; methacrylates and acrylates such as methyl methacrylate, methyl methacrylate dimer, methyl acrylate, glycidyl, acrylate, and glycidyl methacrylate; and allyl esters such as diallyl phthalate, triallyl cyanurate, and triallyl isocyanurate.

As the catalysts (III) for the copolymerization of the compounds (I) and (II) there may be mentioned those peroxides which are active at moderate to high temperatures, such as benzoyl peroxide and tertbutyl perbenzoate. Dialkyl peroxides such as dicumyl peroxide are suitable especially when the resin composition contains a nitrogen compound.

As the compounds (IV) containing at least one oxirane ring, there may be mentioned, in addition to the polyepoxides mentioned above, monoepoxy compounds such as styrene oxide, butyl glycidyl ether, allyl glycidyl ether, and phenyl glycidyl ether.

The curing agents (V) (excluding acid anhydrides, acids, and amine compounds) capable of curing the compound (IV), are selected from the group consisting of the guanidines such as dicyandiamide, 2,6-xylenyl biguanide, o-tolyl biguanide, diphenylguanidine, and di-o-tolylquanidine; and dihydrazides such as adipyl dihydrazide and azelayl dihydrazide.

The catalyst (VI) for the reaction of the components (IV) and (V), is selected from the reaction products of dimethylamine and phenylisocyanates. Mention may be made of the compounds represented by the general formula

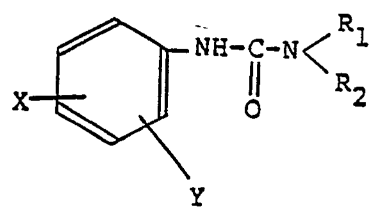

wherein X and Y are each Cl, Br, $CH_3$, $OCH_3$, $OC_2H_5$, $NO_2$, H, or

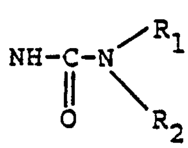

and $R_1$ and $R_2$ represent an alkyl group, allyl group, alkoxy group, alkenyl group, aralkyl group, or an alicyclic compound containing both $R_1$ and $R_2$. Examples are N-(3-chloro-4-methoxyphenyl)-N',N'-dimethylurea, N-(4-chlorophenyl)-N',N'-dimethylurea, N-(3-chloro-4-ethylphenyl)-N',N'-dimethylurea, N-(4-chlorophenyl)-N',N'-dipropylurea, N-(3-chloro-4-methylphenyl)-N',N'-dimethylurea, N-(3,4-dichlorophenyl)-N',N'-dimethylurea, N-(4-methyl-3-nitrophenyl)-N',N'-dimethylurea, N-(3-chloro-4-methylphenyl)-N',N'-dimethylurea, N-(3-chloro-4-ethylphenyl)-N',N'-dimethylurea, N-(4-ethoxyphenyl)-N',N'-dimethylurea, N-(3-chloro-4-methoxyphenyl)-N',N'-dimethylurea, N-(4-methyl-3-nitrophenyl)-N',N'-dimethylurea, N-(4-chlorophenylcarbamoyl)piperadine, N-(4-chlorophenylcarbamoyl)morpholine, and N-4-chlorophenylcarbamoylpyrrolidine.

As the polyisocyanates (VII), mentoned may be made of aromatic or aliphatic polyisocyanates such as 4,4'-diphenylmethanediisocyanate, 2,4-toluenediisocyane, 2,6-toluenediisocyanate, hexamethylenediisocyanate, m-xylylenediisocyanate and polymethylenepolyphenylisocyanate.

As the promoters (VIII), mention may be made of those which generally promote the reaction between an isocyanate and the alcoholic hydroxyl group. The coexistence of a tertiary amine is undesirable. Suitable

promoters are organotin compounds such as dibutyltin dilaurate and tin octoate and metal naphthenates such as lead naphthenate and cobalt naphthenate, though not limited thereto.

The ratios of (I)/(II)/(III) in the present composition are similar to those required for the general radical polymerization systems and are in the range of 40—95/60—5/0.1—5 most preferably 70—90/30—10/0.5—3. If the proportion of the catalyst (III) is less than 0.1, a sufficient rate of curing is not attained, whereas if it exceeds 5, the curing proceeds too rapidly beyond the suitable rate. The ratios (IV)/(V)/(VI) are those which meet the necessary conditions for the curing of epoxy resins and are in the range of 100/0—50/0—10, preferably 100/0—25/0—5, most preferably 100/0—10/2—5. A suitable compounding ratio of the mixture (I)/(II)/(III) to the mixture (IV)/(V)/(VI) is in the range of from 97—3 to 3—97. If the proportion of the latter mixture is less than 3, the adhesive strength becomes insufficient, whereas if it exceeds 97, the rapid curability becomes adversely affected; a preferable ratio is 97—40/3—60. The proportion of the polyisocyanate compound (VII) relative to the mixture of components (I) to (VI) can be optionally selected, so long as the functional group ratio OH/NCO remains in the range 1:0.1—1. By adjusting the proportion of (VII) it is possible to control the stiffness and the tackiness of the composition. The proportion of the promoter (VIII) is preferably 0 to 5 parts for 100 parts of the mixture of components (I) to (VII). The sole role of the promoter (VIII) is to control the rate of reaction between the hydroxyl groiup and the isocyanate group and it should be added in a small amount in view of not to diminish the physical properties of the cured composition. Although the order of mixing of the components is optional, it is suitable for the tackiness and mold flow of the composition to add (IV), (V) and (VI) to the pre-mixture of (I), (II), (III), (VII) and (VIII).

The resin composition thus prepared is preferably thickened before use by standing at a temperature from room temperature to 60°C, preferably from room temperature to 40°C. In the case where reinforcing fibers, fillers, or additives are used, it is necessary to add such materials to the composition before thickening to assure thorough impregnation with the composition.

The reinforcing fibrous materials include inorganic fibers such as glass fiber, alumina fiber, silicon carbide fiber, boron fiber, or carbon fiber and organic fibers such as polyester fiber and polyamide fiber, which are in any form, such as filament, cut fiber, unidirectionally oriented tape or sheet, mat, cloth, nonwoven paper sheet, or cord. If necessary, the composition is incorporated with powdered fillers such as glass, silica, alumina, quartz, mica, calcium carbonate, barium sulfate, and clay in the amount of 5 to 70% by weight based on total weight. It is also possible, if necessary, to add various colorants and release agents such as zinc stearate, phosphates, or alcohols. Other polymers such as homo- or co-polymer of styrene, ethylene, or a methacrylate ester may be added in an amount of 0 to 30% by weight based on total weight. The impregnation of reinforcing fibers, fillers, and additives can be performed in any of the known ways such as the lacquer technique employing a solvent and the hot melt technique without using a solvent. The solvents, if used, should be inert to the reaction, such as, for example, acetone, methyl ethyl ketone, methylene chloride, chloroform, trichloroethylene, dioxane, tetrahydrofuran, benzene, and toluene.

The resin composition of the present invention has more desirable curability as well as superior adhesiveness to various materials and long storage stability than those of the conventionally known compositions and has a high practical value.

The invention is illustrated below in detail with reference to Examples, wherein all parts are by weight. The accompanying drawings which are referred to in Examples are briefly described below.

Fig. 1 is a side view of a pressing tool for use in roentigenoscopic diagnosis.

Fig. 2 is a top view of the pressing tool shown in Fig. 1.

Fig. 3 is a sectional view at A—A of Fig. 2.

Fig. 4 is a sectional view of B—B of Fig. 2.

Fig. 5 shows an example of shaping mold in sectional side view.

Fig. 6 shows a method for reel testing.

Fig. 7 shows an example of shaping mold (in sectional side view) used in Comparative Example.

Fig. 8 shows a portion of amolded reel in sectional view.

Fig. 9 shows a portion of a reel (in sectionalside view) molded in Comparative Example.

Fig. 10 show a plan view of the main part of a reel.

The numerical symbols in the drawings represent the following:

1 Carbon fiber.
2 Resin matrix.
3 Semispherical shell of the pressing tool.
4 Arm.
5 Pressure cylinder.
6 Feeding pot.
7 Top portion of the main part.
8 Rod-like portion of the leg.
9 Slide core.
10 Upper mold.
11 Lower mold.

Example 1

A mixture of 50 moles of maleic anhydride and 108 moles of diethylene glycol was esterified at 140° to 230°C for 3.5 hours. After addition of 50 moles of phthalic anhydride and 0.02 part of hydroquinone to the reaction mixture, the resulting mixture was subjected to esterification at 140° to 230°C for 3.1 hours to yield an unsaturated polyester having an acid value of 54.5 and an unsaturated acid content of 19.8%. To 100 parts of the resulting unsaturated polyester, were added 7 parts of diallyl phthalate monomer and 3 parts of tertbutyl perbenzoate. The resulting mixture was milled on a 3-roll mill at 50°C for 30 minutes to obtain composition (a).

A mixture of 100 parts of an epoxy resin of the bisphenol A glycidyl ether type, 5 parts of dicyandiamide, and 3 parts of 1-(3,4-dichlorophenyl)-3,3-dimethylurea was milled in a "Homomixer" for 30 minutes to obtain composition (b).

The compositions (a) and (b) were mixed in varied weight ratios of 25/75, 60/40, 75/25, 98/2, and 100/0 and milled on a 3-roll mill at 50°C for 30 minutes to yield compositions C—1, C—2, C—3, C—4, and C—5, respectively. The performance characteristics of each composition were as shown in Table 1.

Example 2

A mixture of 75 parts of diallyl phthalate prepolymer (softening point, 80°C; iodine value, 60), 12 parts of diallyl phthalate monomer, and 3 parts of tertbutyl perbenzoate was milled on a 3-roll mill at 50°C for 30 minutes to yield composition (e). Another mixture of 5 parts of dicyandiamide, 3 parts of 1-(4-chlorophenyl)-3,3-dimethylurea, and 100 parts of a resin prepared from 100 parts of an epoxy resin of the bisphenol A glycidyl ether type (epoxy equivalent, 200) and 9 parts of 4,4'-diaminodiphenylsulfone by the prepolymerization at 150°C for 3 hours was milled on a 3-roll mill at 50°C for 30 minutes to yield composition (f). The compositions (e) and (f) were mixed in varied weight ratios of 25/75, 60/40, 75/25, 98/2 and 100/0 and milled on a 3-roll mill at 50°C for 3 hours to yield compositions g-l, g-2, g-3, g-4, and g-5, respectively. The performance characteristics of each composition were as shown in Table 2.

Example 3

A mixture of 95 parts of an epoxy resin of the bisphenol A glycidyl ether type (epoxy equivalent, 190), 39 parts of methacrylic acid, 0.7 part of lithium chloride, and 0.05 part of hydroquinone was allowed to react by heating at 100°C to yield a vinyl ester (h) having an acid value of 3.0. A resin composition (i) was obtained by mixing 60 parts of the vinyl ester (h), 40 parts of styrene, and 2.5 parts of tert-butyl perbenzoate. Another mixture of 40 parts of an epoxy resin of the bisphenol A glycidyl ether type (epoxy equivalent, 190), 60 parts of an epoxy resin of the o-cresol-novolac diglycidyl ether type (epoxy equivalent, 220), 10 parts of N,N,O-triglycidyl-m-aminopenol (epoxy equivalent; 120), 5 parts of dicyandiamide, and 3 parts of 1-(4-chlorophenyl)-3,3-dimethylurea was milled on a 3-roll mill at 50°C for 30 minutes to yield resin composition (j). The compositions (i) and (j) were mixed in varied weight ratios of 25/75, 60/40, 75/25, 98/2, and 100/0 and milled on a 3-roll mill to yield compositions k-l, k-2, k-3, k-4, and k-5, respectively. The performance characteristics of each composition were as shown in Table 3.

Example 4

A mixture was prepared by mixing 70 parts of the vinyl ester (h) obtained in Example 3, 30 parts of glycidyl methacrylate, and 2.5 parts of tert-butyl perbenzoate. Resin composition (l) was prepared by mixing together the above mixture, 0.75 part of dicyandiamide, and 0.5 part of 1-(4-chlorophenyl)-3,3-dimethylurea. This composition (l) showed a storage stability of 30 days or more at 25°C, a gel time at 140°C of 1.2 minutes, and a heat distortion temperature of 140°C.

Comparative Example 1

Resin composition (m) was prepared in the same manner as in Example 1, except that 1 part of maleic anhydride and 3 parts of 2-ethyl-4-methylimidazole were used in place of 5 parts of dicyandiamide and 3 parts of 1-(3,3-dichlorophenyl)-3,3-dimethylurea, respectively. The performance characteristics of this composition (m) were as shown in Table 4. With respect to curability and storage stability, the superiority of the composition of this invention is apparent.

Table 1

| Composition, ratio (a)/(b) | Storage stability *1 (day) | Gel time at 140°C (min.) | Adhesion strength *2 ($kg/mm^2$) | Heat distortion temp. (°C) | Curing conditions *3 (min./ 145°C) |
|---|---|---|---|---|---|
| C-1 25/75 | > 30 | 10.5 | 1.5 | 130 | 10 |
| C-2 60/40 | > 30 | 6.6 | 1.5 | 120 | 10 |
| C-3 75/25 | > 30 | 2.5 | 1.5 | 115 | 3 |
| C-4 98/2 | > 30 | 1.7 | 1.5 | 110 | 2 |
| C-5 100/0 | > 30 | 1.5 | 0.7 | 105 | 2 |

Note:

*1 Number of days elapsed before the gel time at 140°C of the sample (stored at 25°C) had become one-half of that before storage.

*2 Share strength at 25°C tested in accordance with the method of ASTM D 1002. The same applies hereinafter.

*3 Further post-cured at 130°C for 2 hours.

Table 2

| Composition, ratio (e)/(g) | Storage stability (day) | Gel time at 140°C (min.) | Adhesion strength (kg/mm$^2$) | Heat distortion temp. (°C) | Curing conditions * (min./145°C) |
|---|---|---|---|---|---|
| g-1 25/75 | > 30 | 12.0 | 1.5 | 130 | 12 |
| g-2 60/40 | > 30 | 8.5 | 1.5 | 140 | 10 |
| g-3 75/25 | > 30 | 4.9 | 1.5 | 150 | 5 |
| g-4 98/2 | > 30 | 4.1 | 1.0 | 160 | 5 |
| g-5 100/0 | > 30 | 4.0 | 0.7 | 160 | 5 |

Note:

* Further post-cured at 130°C for 2 hours.

Table 3

| Composition, ratio (i)/(j) | Storage stability (day) | Gel time at 140°C (min.) | Adhesion strength (kg/mm$^2$) | Heat distortion temp. (°C) | Curing conditions * (min./145°C) |
|---|---|---|---|---|---|
| k-1 25/75 | 2 | 10.1 | 1.5 | 140 | 10 |
| k-2 60/40 | 5 | 5.0 | 1.5 | 140 | 5 |
| k-3 75/25 | > 30 | 1.9 | 1.5 | 135 | 2 |
| k-4 98/2 | > 30 | 1.4 | 1.0 | 130 | 2 |
| k-5 100/0 | > 30 | 1.0 | 0.7 | 125 | 2 |

Note:

* Further post-cured at 130°C for 2 hours.

Table 4

| Composition, ratio (a)/(d) | Storage stability (day) | Gel time at 140°C (min.) | Adhesion strength ($kg/mm^2$) | Heat distortion temp. (°C) | Curing conditions * (min./ 145°C) |
|---|---|---|---|---|---|
| m-1 25/75 | < 3 | 15.0 | 1.0 | 130 | 15 |
| m-2 60/40 | < 3 | 10.0 | 1.0 | 120 | 10 |
| m-3 75/25 | < 4 | 3.8 | 1.0 | 115 | 5 |
| m-4 98/2 | < 4 | 2.0 | 0.8 | 110 | 3 |
| m-5 100/0 | > 30 | 1.5 | 0.7 | 105 | 2 |

Note:

* Further post-cured at 130°C for 2 hours.

Example 5

Compositions (a) and (b) were prepared as in Example 1. To the composition (a), was added 7 parts of polymethylenepolyphenylisocyanate (viscosity, 150 cps at 25°C; NCO content, 31%) followed by 0.3 part of dibutyltin dilaurate. After thorough mixing, the mixture was left standing at room temperature for 20 hours. The mixture was then mixed with the composition (b) in varied ratios as shown in Table 5. The resulting compositions (A) were allowed to ripen in a tightly closed vessel at 40°C for 48 hours to obtain compositions (B) having characteristics as shown in Table 5.

Table 5

| | Ratio (b)/(a) | Tackiness | Tmax in gelation * (°C) | Gel time * (min.) |
|---|---|---|---|---|
| B-1 | 4/96 | Low | 190 | 1.0 |
| B-2 | 25/75 | Low | 170 | 1.3 |
| B-3 | 65/35 | High | 160 | 4.0 |
| B-4 | 80/20 | High | 150 | 9.5 |
| B-5 | 0/100 | Low | 250 | 0.9 |

Note:

* Tested at 140°C.

Example 6

To 95 parts of an epoxy resin of the bisphenol A diglycidyl ether type (epoxy equivalent, 190), were added 39 parts of methacrylic acid, 0.7 part of lithium chloride and 0.05 part of hydroquinone. The mixture was allowed to react at 100°C to yield a vinyl ester. A mixture was prepared by adding 40 parts of styrene and 2.5 parts of tert-butyl perbenzoate to 60 parts of the vinyl ester obtained above. To the mixture, were added 10 parts of polymethylenepolyphenylisocyanate (viscosity, 150 cps at 25°C; NCO content, 31%) and 0.3 part of dibutyltin dilaurate. The resulting mixture was thoroughly stirred to obtain composition (m'). Another composition (n) was prepared by milling 100 parts of the above epoxy resin, 5 parts of dicyandiamide, and 3 parts of 1-(3,4-dichlorophenyl)-3,3-dimethylurea in a "Homomixer" for 30 minutes. The composition (m') was left standing at room temperature for 20 hours and mixed with the composition (n) in varied ratios as shown in Table 6. The resulting compositions (C) were allowed to ripen in a tightly closed vessel at 40°C for 48 hours to obtain resin compositions (D) having characteristics as shown in Table 6.

Table 6

| | Ratio (n)/(m') | Tackiness | Tmax in gelation * (°C) | Gel time * (min.) |
|---|---|---|---|---|
| D-1 | 4/96 | Low | 190 | 0.7 |
| D-2 | 25/75 | Low | 180 | 0.9 |
| D-3 | 65/35 | High | 170 | 2.6 |
| D-4 | 80/20 | High | 150 | 8.0 |
| D-5 | 0/100 | Low | 250 | 0.7 |

Note:

* Tested at 140°C.

Example 7

To 95 parts of a novolac-type epoxy resin ("Epi-Kote 152" of Shell Chemical Co.; epoxy equivalent, 175), were added 42 parts of methacrylic acid, 0.7 part of lithium chloride, and 0.05 part of hydroquinone. The mixture was allowed to react at 100°C to yield a vinyl ester. A mixture was prepared by adding 40 parts of styrene and 2.9 parts of tert-butyl perbenzoate to 60 parts of the vinyl ester obtained above. To the mixture, were added 10 parts of polymethylenepolyphenylisocyanate (viscosity, 150 cps at 25°C; NCO cntent, 31%) and 0.3 part of dibutyltin dilaurate. The resulting mixture was thoroughly stirred to obtain compositions (O). Another composition (P) was prepared by milling 100 parts of a diglycidyl phthalate-type epoxy resin (epoxy equivalent, 154), 5 parts of dicyandiamide, and 3 parts of 1-(3,4-dichlorophenyl)-3,3-dimethylurea in a "Homomixer" for 30 minutes. The compositions (O), which had been left standing at room temperature for 20 hours, and (P) were mixed in varied ratios as shown in Table 7. The resulting compositions (E) were allowed to ripen in a tightly closed vessel at 40°C for 48 hours to obtain resin compositions (F) having characteristics as shown in Table 7.

Table 7

| | Ratio (P)/(O) | Tackiness | Tmax in gelation (°C) | Gel time (min.) |
|---|---|---|---|---|
| F-1 | 4/96 | Low | 190 | 0.8 |
| F-2 | 25/75 | Low | 170 | 1.3 |
| F-3 | 65/35 | High | 150 | 3.4 |
| F-4 | 80/20 | High | 130 | 9.5 |
| F-5 | 0/100 | Low | 250 | 0.7 |

Example 8

In the same manner as in Example 7, compositions (O) and (P) were prepared. The composition (O), immediately after preparation, was mixed with the composition (P) in varied ratios to obtain compositions (E') which were then ripened in a tightly closed vessel at 40°C for 48 hours to yield resin compositions (F') having characteristics as shown in Table 8.

Table 8

| | Ratio (P)/(O) | Tackiness | Tmax in gelation (°C) | Gel time * (min.) |
|---|---|---|---|---|
| F'-1 | 4/96 | Low | 210 | 1.2 |
| F'-2 | 25/75 | High | 180 | 2.4 |
| F'-3 | 65/35 | High | 170 | 4.5 |
| F'-4 | 80/20 | High | 150 | 11.0 |

Note:

* Tested at 140°C.

Comparative Example 2

A mixture of 144 parts of the vinyl ester obtained in Example 6 and 98 parts of maleic anhydride was allowed to react at 100°C for about one hour to form a half ester of maleic acid. To 60 parts of the reaction product, was added 40 parts of styrene, then 2.9 parts of tert-butyl perbenzoate, and finally 5 parts of magnesium oxide to yield composition (q). The composition (n) prepared in Example 6 was mixed with the composition (q) in a ratio of 25/75 (composition of the n/q type). This composition and the composition of the n/m' type (n/m' = 25/75) prepared in Example 6 were left standing at 40°C for 12, 24, 48, 72, 96 and 192 hours. The thickening characteristics were as shown in Table 9.

Table 9

| composition | | Change in tackiness and stiffness with time of standing | | | | | |
|---|---|---|---|---|---|---|---|
| | | 12hr | 24hr | 48hr | 72hr | 96hr | 192hr |
| n/m' type | tackiness | High | Medium | Low | Low | Low | Low |
| | Stiffness | Soft | Medium | suitable | | | |
| n/q type | tackiness | High | High | High | Medium | Low | Low |
| | Stiffness | Soft | Soft | Soft | Soft | Hard | Very hard |

Example 9

Carbon fiber "Pyrofil AS" (Trademark for Mitsubishi Rayon Co.) was impregnated with the compositions (C) prepared in Example 1, the viscosity of which has been adjusted by heating, to prepare a prepreg of 30% by weight in resin content. Each prepreg, which was adequate in flexibility and adhesiveness, showed a gel time at 140°C as shown in Table 10 and a room temperature working life of 30 days or more. Each prepreg was laminated and molded under the molding conditions shown in Table 10 to obtain a composite excellent in mechanical properties (Table 10).

Table 10

| | C-1 | C-2 | C-3 | C-4 |
|---|---|---|---|---|
| Gel time (minute) | 10.5 | 6.6 | 2.5 | 1.7 |
| Flexural strength ($kg/mm^2$) | 184 | 184 | 183 | 179 |
| Modulus of elasticity in flexure ($kg/mm^2$) | 14420 | 14398 | 14307 | 13971 |
| I.L.S.S. ($kg/mm^2$) | 9.3 | 9.1 | 8.7 | 7.9 |
| Molding conditions *1, *2 (min) | 13.0 | 8.0 | 4.0 | 3.0 |

Note:

*1 Molding temperature: 145°C; molding pressure: 7 $kg/cm^2$

*2 Post cure: 130°C, 2 hours

Example 10

Carbon fiber "pyrofil AS" (Trademark for Mitsubishi Rayon Co.) was impregnated with the composition (g) prepared in Example 2 and dried at 50°C for about 60 minutes to drive off the solvent, leaving behind a prepreg of 30% by weight in resin content. Each prepreg, which was adequate in flexibility and adhesiveness, showed a gel time at 140°C as shown in Table 11 and a room temperature working life of 35 days or more. Each prepag was molded under the molding conditions shown in Table 11 to obtain a composite excellent in mechanical characteristics (Table 11).

Table 11

| | g-1 | g-2 | g-3 | g-4 |
|---|---|---|---|---|
| Gel time (minute) | 12.0 | 8.5 | 4.9 | 4.1 |
| Flexural strength ($kg/mm^2$) | 186 | 185 | 184 | 181 |
| Modulus of elasticity in flexure ($kg/mm^2$) | 14565 | 14513 | 14376 | 14081 |
| I.L.S.S. ($kg/mm^2$) | 9.5 | 9.3 | 8.8 | 8.2 |
| Molding conditions *1, *2 (min) | 15.0 | 10.0 | 6.0 | 5.0 |

Note:

*1 Molding temperature: 145°C; molding pressure: 7 $kg/cm^2$

*2 Post cure: 130°C, 2 hours

Example 11

Carbon fiber "Pyrofil AS" (Trademark for Mitsubishi Rayon Co.) was impregnated with the compositions (K) prepared in Example 3 to prepare a prepreg of 30% by weight in resin content. Each prepreg, which was adequate in flexibility and adhesiveness, showed a gel time at 140°C as shown in Table 12 and a room temperature working life of 30 days or more. Each prepreg was molded under the molding conditions shown in Table 12 to obtain a composite excellent in mechanical characteristics.

Table 12

| | K-1 | K-2 | K-3 | K-4 |
|---|---|---|---|---|
| Gel time (minute) | 10.1 | 5.0 | 1.9 | 1.4 |
| Flexural strength ($kg/mm^2$) | 187 | 186 | 184 | 180 |
| Modulus of elasticity in flexure ($kg/mm^2$) | 14683 | 14496 | 14403 | 14050 |
| I.L.S.S. ($kg/mm^2$) | 9.6 | 9.5 | 8.9 | 8.1 |
| Molding conditions *1, *2 (min) | 13.0 | 7.0 | 3.0 | 3.0 |

Note:

*1 Molding temperature: 145°C; molding pressure: 7 $kg/cm^2$

*2 Post cure: 130°C, 2 hours

Example 12

Chipped strand glass fiber mat (120 parts) was impregnated with a mixture of 100 parts of the composition (A) [the ratio (b)/(a) was as shown in Table 13] prepared in Example 5 and 3 parts of zinc stearate. The impregnated mat was left standing in a tightly closed vessel at 40°C for 48 hours to obtain SMC of low tackiness. The SMC thus obtained was cured under the molding conditions as shown in Table 13 and tested for flexural strength and modulus of elasticity in flexure in accordance with ASTM D 790—71 and for interlaminar shear strength (I.L.S.S.) in accordance with ASTM D 2344—76. The results obtained were as shown in Table 13.

Table 13

| Ratio (b)/(a) | Easiness on handling | Flexural strength ($kg/mm^2$) | Modulus of elasticity in flexure ($kg/mm^2$) | I.L.S.S. ($kg/mm^2$) | Molding conditions *1, *2 (min.) |
|---|---|---|---|---|---|
| 4/96 | Good | 39.2 | 1310 | 6.5 | 5 |
| 25/75 | Good | 40.4 | 1660 | 7.0 | 5 |
| 65/35 | Fair to poor | 43.0 | 1740 | 7.0 | 5 |
| 80/20 | Fair to poor | 45.0 | 1810 | 7.0 | 10 |
| 0/100 | Good | 25.4 | 1040 | 4.0 | 5 |

Note: *1 Mold temperature: 135°C; molding pressure: 30 $kg/cm^2$

*2 Post Cure: 130°C, 2 hours

Example 13

In a manner similar to that in Example 12, SMC of the chopped strand glass fiber prepared using a mixture of 100 parts of the composition (C) of Example 6, in which the composition (n) was mixed in varied (n)/(m') ratio as shown in Table 14, and 3 parts of zinc stearate. The molded SMC was tested for flexural strength, modulus of elasticity in flexure, and I.L.S.S. The results obtained were as shown in Table 14.

Table 14

| Ratio (n)/(m') | Easiness on handling | Flexural strength ($kg/mm^2$) | Modulus of elasticity in flexure ($kg/mm^2$) | I.L.S.S. ($kg/mm^2$) | Molding conditions *1, *2 (min.) |
|---|---|---|---|---|---|
| 4/96 | Good | 46.5 | 1914 | 6.5 | 5 |
| 25/75 | Good | 48.5 | 2005 | 7.5 | 5 |
| 65/35 | Fair to poor | 49.8 | 2117 | 7.5 | 5 |
| 80/20 | Fair to poor | 51.3 | 2211 | 7.5 | 10 |
| 0/100 | Good | 39.1 | 1614 | 4.0 | 5 |

Note:

*1 Mold temperature: 135°C;

molding pressure: 30 $kg/cm^2$

*2 Post Cure: 130°C, 2 hours

Example 14

The composition (O) prepared in Example 7 was left standing at room temperature for 20 hours and mixed with the composition (P) in varied ratios as shown in Table 15 to obtain composition (E), in a manner similar to that in Example 12, chopped strand glass fiber mat was impregnated with a mixture of 100 parts of the composition (E) and 3 parts of zinc stearate to obtain SMC. The molded SMC was tested for flexural strength, modulus of elasticity in flexure, and I.L.S.S. The results obtained were as shown in Table 15.

Table 15

| Ratio (P)/(O) | Easiness on handling | Flexural strength ($kg/mm^2$) | Modulus of elasticity in flexure ($kg/mm^2$) | I.L.S.S. ($kg/mm^2$) | Molding conditions *1, *2 (min.) |
|---|---|---|---|---|---|
| 4/96 | Good | 48.5 | 2012 | 7.0 | 5 |
| 25/75 | Good | 51.9 | 2120 | 8.5 | 5 |
| 65/35 | Good | 52.9 | 2215 | 8.5 | 5 |
| 80/20 | Fair to poor | 54.2 | 7300 | 8.5 | 10 |
| 0/100 | Good | 42.4 | 1733 | 5.0 | 5 |

Note:

*1 Mold temperature: 135°C;
molding pressure: 30 $kg/cm^2$

*2 Post Cure: 130°C, 2 hours

Example 15

A resin composition was prepared by mixing 100 parts of the composition (A) of Example 5 and 3 parts of "Zelec UN" (Trademark for an unneutralized phosphated alcohol of Du Pont Co.). The resulting composition was spread by means of a common SMC machine. Carbon fiber "Pyrofil EAS" (Trademark for Mitsubishi Rayon Co.) 10000 fil, while being cut to 25 mm in length, was strewed over the spread composition and the strewed fiber was covered with spread composition to impregnate the fiber with the composition. The resulting impregnated material was left standing in a tightly closed vessel at 40°C for 48 hours to obtain SMC of low tackiness which contained 50% by weight of carbon fiber. The SMC was cured under molding conditions as shown in Table 16 and tested for flexural strength and modulus of elasticity in accordance with ASTM D 790—71 and for I.L.S.S. in accordance with ASTM D 2344—76. The results obtained were as shown in Table 16.

Table 16

| Ratio (b)/(a) | Easiness on handling | Flexural strength (kg/mm$^2$) | Modulus of elasticity in flexure (kg/mm$^2$) | I.L.S.S. (kg/mm$^2$) | Molding conditions *1, *2 (min.) |
|---|---|---|---|---|---|
| 4/96 | Good | 43.5 | 2600 | 5.0 | 5 |
| 25/75 | Good | 45.5 | 2650 | 7.5 | 5 |
| 65/35 | Fair to poor | 46.0 | 2700 | 7.8 | 5 |
| 80/20 | Fair to poor | 46.5 | 2750 | 7.7 | 10 |
| 0/100 | Good | 30.5 | 2400 | 4.1 | 5 |

Note:

*1 Mold temperature: 135°C;
molding pressure: 30 kg/cm$^2$

*2 Post Cure: 130°C, 2 hours

Example 16

Compositions (n) and (m') of Example 6 were mixed in varied ratios as shown in Table 17 to obtain compositions (C). SMC containing carbon fiber was prepared as in Example 15 by using a mixture of 100 parts of the composition (C) and 1.5 parts of "Zelec UN". The SMC was molded and tested for flexural strength, modulus of elasticity in flexure, and I.L.S.S. The results obtained were as shown in Table 17.

Table 17

| Ratio (n)/(m') | Easiness on handling | Flexural strength ($kg/mm^2$) | Modulus of elasticity in flexure ($kg/mm^2$) | I.L.S.S. ($kg/mm^2$) | Molding conditions *1, *2 (min.) |
|---|---|---|---|---|---|
| 4/96 | Good | 47.5 | 3700 | 5.7 | 5 |
| 25/75 | Good | 48.0 | 4000 | 8.0 | 5 |
| 65/35 | Fair to poor | 50.0 | 4100 | 8.1 | 5 |
| 80/20 | Fair to poor | 51.5 | 4200 | 8.5 | 10 |
| 0/100 | Good | 38.0 | 3000 | 4.2 | 5 |

Note:

*1 Mold temperature: 135°C; molding pressure: 30 $kg/cm^2$

*2 Post Cure: 130°C, 2 hours

Example 17

Compositions (P) and (O) of Example 7 were mixed in varied ratios as shown in Table 18 to obtain compositions (E). SMC containing carbon fiber was prepared as in Example 15 by using a mixture of 100 parts of the composition (E) and 2 parts of "Zelec UN". The SMC was molded and tested for flexural strength, modulus of elasticity in flexure, and I.L.S.S. The results obtained were as shown in Table 18.

Table 18

| Ratio (P)/(O) | Easiness on handling | Flexural strength (kg/mm²) | Modulus of elasticity in flexure (kg/mm²) | I.L.S.S. (kg/mm²) | Molding conditions *1, *2 (min.) |
|---|---|---|---|---|---|
| 4/96 | Good | 49.0 | 4000 | 6.5 | 5 |
| 25/75 | Good | 52.0 | 4100 | 8.5 | 5 |
| 65/35 | Good | 53.0 | 4200 | 8.5 | 5 |
| 80/20 | Fair to poor | 53.5 | 4300 | 8.5 | 10 |
| 0/100 | Good | 40.0 | 3700 | 5.0 | 5 |

Note:

*1 Mold temperature: 135°C;

molding pressure: 30 kg/cm²

*2 Post Cure: 130°C, 2 hours

Example 18

A mixture of 100 parts of the composition (A) of Example 5 and 3 parts of "Zelec UN" was spread over a sheet of polyethylene film. Carbon fiber "Pyrofil EAS" (Trademark for Mitsubishi Rayon Co.) 10000 fil was arranged in parallel and combined with the spread resin composition. The resulting sheet material was left standing in a tightly closed vessel at 40°C for 48 hours to obtain a low tackiness sheet containing 60% by weight of unidirectionally arranged carbon fiber. The cured sheet material was tested for flexural strength along the fiber direction, modulus of elasticity in flexure (ASTM D 790—71), and I.L.S.S. (ASTM D 2344—76). The results obtained were as shown in Table 19.

Table 19

| Ratio (b)/(a) | Easiness on handling | Flexural strength ($kg/mm^2$) | Modulus of elasticity in flexure ($kg/mm^2$) | I.L.S.S. ($kg/mm^2$) | Molding conditions *1, *2 (min.) |
|---|---|---|---|---|---|
| 4/96 | Good | 160 | 11.0 | 8.8 | 5 |
| 25/75 | Good | 185 | 11.8 | 9.5 | 5 |
| 65/35 | Fair to poor | 190 | 12.0 | 9.8 | 5 |
| 80/20 | Fair to poor | 190 | 12.0 | 9.8 | 10 |
| 0/100 | Good | 140 | 11.0 | 7.0 | 5 |

Note:

*1 Mold temperature: 135°C; molding pressure: 30 $kg/cm^2$

*2 Post Cure: 130°C, 2 hours

Example 19

A carbon fiber-containing SMC [(P)/(O) = 25/75] prepared in Example 17 was charged into a mold for compression molding and cured under application of heat and pressure to obtain a pressing tool for use in roentgenoscopic diagnosis, which is illustrated in Fig. 1 (sectional view) and Fig. 2 (plan). For comparison, specimens of the tool made from the same SMC as that described above but different in thickness and the specimen made from wood were tested for the deflection under load, X-ray transmittance, and weight. The results obtained were as shown in Table 20. The cross section of the arm and the cross section at the joint of semispherical sheel to the arm were as shown in Figs. 3 and 4, respectively.

Table 20

| | Material | Wall thickness (mm) | Deflection at the tip under load (mm) | X-ray transmittance relative to wood | Weight (g) |
|---|---|---|---|---|---|
| 1 | Wood | 25 | 0.11 | 1 | 140 |
| 2 | Composition of present invention | 3 | 0.06 | 1 | 140 |
| 3 | | 2 | 0.08 | 0.67 | 80 |

Example 20

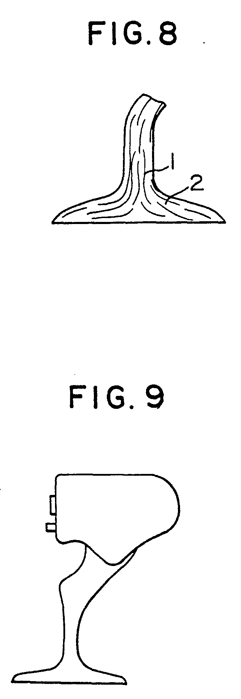

A part of reel for fishing (Fig. 10) was molded by forcing, under application of a pressure of 50 $kg/cm^2$, into a mold of reel the unidirectionally oriented sheet material [(b)/(a) = 25/75], prepared in Example 18, from the bottom of leg as shown in Fig. 5, then curing the material at a mold temperature of 145°C for 3 minutes, and post-curing at 130°C for 2 hours. The molded reel was subjected to breaking test as shown in Fig. 6. The breaking stress per unit cross-sectional area at the foot of the leg was found to be 25 $mg/mm^2$. In another molding test employing a mold shown in Fig. 7, the material was forced under applied pressure from the reel top. Upon breaking test, the breaking stress was found to be 15 $kg/mm^2$. Observation of the section of leg ascertained as seen from Fig. 8 and 9, that the orientation of carbon fiber was satisfactory when the material as forced into the mold from the bottom of leg, whereas the orientation was disturbed when charged from the top.

## Claims

1. A resin composition whose resin forming components comprise (I) at least one compound selected from the group consisting of (A) unsaturated polyesters containing hydroxyl groups which is a polyester of a dibasic carboxylic acid and a glycol component wherein at least a portion of the dibasic carboxylic acid component is an unsaturated dibasic carboxylic acid, and (B) reaction products of polyepoxides and ethylenically unsaturated carboxylic acids in a ratio of 1:0.5 to 1:11 of epoxy groups to carboxylic acid groups using LiCl as a reaction catalyst; (II) at least one monomer copolymerizable with said compound (I) which is selected from the group consisting of ethylenically unsaturated monomers and unsaturated allylic monomers; (III) a peroxide catalyst for the copolymerization of compounds (I) and (II); (IV) at least one compound containing at least one oxirane ring; (V) a curing agent (excluding acid anhydrides, acids and amine compounds) capable of curing said oxirane compound (IV) selected from the group consisting of the guanidines, such as a dicyandiamide, 2,6-xylenylbiguanide, o-tolyl biguanide, diphenylguanidine and dihydrazides, such as adipyl dihydrazide and azelayl dihydrazide; and (VI) a catalyst capable of promoting the curing of compounds (IV) and the activity of curing agent (V) selected from the reaction products of dimethylamine and phenyl isocyanates.

2. A resin composition according to claim 1, wherein the resin composition contains as component (I) the compound (A), which is a polyester of maleic acid and phthalic acid.

3. A resin composition according to claim 1, wherein the resin composition contains as component (I), the compound (B), which is a reaction product between methyacrylic acid, acrylic acid or crotonic acid and a compound selected from the group consisting of polyglycidyl ethers of diphenylolalkanes, polyhydric phenols and polyglycidyl ethers of p-aminophenol and m-aminophenol and polyamines; and epoxides of cycloaliphatic compounds.

4. A resin composition according to claim 1, wherein the component (II) is a compound selected from the group consisting of styrene derivates, acrylates, methacrylates and allyl esters.

5. A resin composition according to claim 1, wherein the component (III) is a compound selected from the group consisting of those peroxides which are active at moderate to high temperatures.

6. A resin composition according to claim 1, wherein the component (IV) is a compound selected from the group consisting of polyglycidyl ethers of diphenylolakanes, polyhydric phenols and polyamines; epoxides of cycloaliphatic compounds; and the monoepoxy compounds styrene oxide, butyl glycidyl ether, and allyl glycidyl ether.

7. A resin composition according to claim 1, wherein the component (VI) is a compound selected from the group consisting of reaction products of dimethylamine and the phenylisocyanates.

8. A FRP material comprising a reinforcing fiber impregnated with a resin composition according to claim 1.

9. A resin composition according to claim 1 which contains a polyisocyanate compound (VII) and a promoter (VIII) for the reaction between the isocyanate group and the hydroxyl group.

10. A resin composition according to claim 9, wherein the polyisocyanate compound (VII) is selected from the group consisting of the aromatic and aliphatic polyisocyanates 4,4'-diphenylmethanediisocyanate, 2,4-toluenediisocyanate, 2,6-toluenediisocyanate, hexamethylenediisocyanate, m-xylylenediisocyanate and polymethylenepolyphenylisocyanates.

11. A resin composition according to claim 9, wherein the promoter (VIII) is selected from the group consisting of the organic tin compound dibutyltin dilaurate and tin octoate, and the metal naphthenates tin naphtenate and cobalt naphthenate.

12. A FRP material comprising a reinforcing fiber impregnated with a resin composition according to claim 9.

13. A resin composition according to claim 1, wherein the ratio of the mixture of (I), (II) and (III) to the mixture of (IV), (V) and (VI) is 97—3/3—97 by weight.

14. A resin composition according to claim 9, wherein the ratio is the mixture of (I), (II) and (III) to the mixture of (IV), (V) and (VI) is 97—3/3—97 by weight.

15. A resin composition according to claim 9, wherein the amount of (VII) relative to the total amount of (I) to (VI) is such that the functional group ratio OH/NCO is 1/0.1—1.

16. A FRP material according to claim 8 wherein the reinforcing fiber is selected from the group consisting of inorganic fibers including glass fiber, alumia fiber, silicon carbide fiber, boron fiber, and carbon fiber and organic fibers including polyester fiber and polyaramide fiber.

17. A molded product made by the thermal curing of the FRP material according to claim 8.

18. A molded product made by the thermal curing of the FRP material according to claim 16.

19. A resin composition according to claim 7, wherein component (I) is a polyester of maleic anhydride, phthalic anhydride and diethylene glycol, component (II) is diallyl phthalate and component (IV) is a bisphenol A diglycidyl ether epoxy resin.

20. A resin composition according to claim 7, wherein component (I) is a reaction product of a bisphenol A diglycidyl ether epoxy resin and methacrylic acid, component (II) is styrene and component (IV) is a bisphenol A diglycidyl either epoxy resin.

**Patentansprüche**

1. Harzmasse, deren harzbildende Bestandteile: (I) mindestens eine Verbindung, die aus der Gruppe ausgewählt ist, die aus (A) Hydroxylgruppen enthaltenden ungesättgten Polyestern, welche Polyester aus einer zweibasigen Carbonsäure und einem Glykolbestandteil sind, worin mindestens ein Teil des zweibasigen Carbonsäurebestandteils eine ungesättigte zweibasige Carbonsäure ist, und (B) unter Verwendung von LiCl als Reaktionskatalysator aus Polyepoxiden und ethylenisch ungesättigten Carbonsäuren in einem Verhältnis von Epoxygruppen zu Carbonsäuregruppen von 1:0,5 bis 1:1, gebildeten Reaktionsprodukten besteht; (II) mindestens ein mit der Verbindung (I) compolymerisierbares Monomer, welches aus der aus ethylenisch ungesättigten Monomeren und ungesättigten Allylmonomeren bestehenden Gruppe ausgewählt ist; (III) ein Peroxidkatalysator für die Copolymerisation der Verbindungen (I) und (II); (IV) mindestens ein Verbindung, die mindestens einen Oxiranring enthält; (V) ein Härtungsmittel (ausgenommen Säureanhydride, Säuren und Aminverbindungen), das zur Härtung der Oxiranverbindung (IV) geeignet ist und aus der aus Guanidine, wie Dicyandiamid, 2,6-Xylenylbiguanid, o-Tolylbiguanid, Diphenylguanidin, und Dihydrazide, wie Adipyldihydrazid und Azelayldihydrazid, besthenden Gruppe ausgewählt ist; und (VI) einer Katalysator, der zur Beschleunigung der Härtung der Verbindungen (IV) und der Aktivität des Härtungsmittels geeignet ist und aus Reaktionsprodukten aus Dimethylamin und Phenylisocyanaten ausgewählt ist, umfassen.

2. Harzmasse nach Anspruch 1, worin die Harzmasse als Bestandteil (I) die Verbindung (A) enthält, welche ein Polyester aus Maleinsäure und Phthalsäure ist.

3. Harzmasse nach Anspruch 1, worin die Harzmasse als Bestandteil (I) die Verbindung (B) enthält welche ein Reaktionsprodukt aus Methacrylsäure, Acrylsäure oder Crotonsäure und einer Verbindung ist, die aus der aus Polyglycidylethern von Diphenylolalkanen, mehrwertigen Phenolen und Polyglycidylethern von p-Aminophenol und m-Aminophenol, Polyaminen und Epoxiden von cycloaliphatischen Verbindungen bestehenden Gruppe ausgewählt ist.

4. Harzmasse nach Anspruch 1, worin der Bestandteil (II) eine Verbindung ist, die aus der aus den Styrolderivaten, Acrylaten, Methacrylaten und Allylestern bestehenden Gruppe ausgewählt ist.

5. Harzmasse nach Anspruch 1, worin der Bestandteil (III) eine Verbindung ist, die aus der Gruppe ausgewählt ist, die aus denjenigen Peroxiden besteht, welche bei mäßigen bis hohen Temperaturen aktiv sind.

6. Harzmasse nach Anspruch 1, worin der Bestandteil (IV) ein Verbindung ist, die aus der Gruppe ausgewählt ist, die aus Polyglycidylethern von Diphenylolalkanen, mehrwertigen Phenolen und Polyaminen, Epoxiden von cycloaliphatischen Verbindungen, und den Monoepoxyverbindungen Styroloxid, Butylglycidylether und Allylglycidylether besteht.

7. Harzmasse nach Anspruch 1, worin der Bestandteil (VI) eine Verbindung ist, die aus der Gruppe ausgewählt ist, die aus Reaktionsprodukten aus Dimethylamin und Phenylisocyanaten besteht.

8. Faserverstärktes Kunststoff (FRP)-Material enthaltend eine Verstärkungsfaser, die mit einer Harzmasse nach Anspruch 1 imprägniert ist.

9. Harzmasse nach Anspruch 1, welche eine Polyisocyanatverbindung (VII) und einem Beschleuniger (VIII) für die Reaktion der Isocyanatgruppe mit der Hydroxylgruppe enthält.

10. Harzmasse nach Anspruch 9, worin die Polyisocyanatverbindung (VII) aus der Gruppe ausgewählt ist, die aus den aromatischen und aliphatischen Polyisocyanaten 4,4'-Diphenylmethandiisocyanat, 2,4-Toluoldiisocyanat, 2,6-Toluoldiisocyanat, Hexamethylendiisocyanat, m-Xylylendiisocyanat und Polymethylenpolyphenylisocyanaten besteht.

11. Harzmasse nach Anspruch 9, worin der Beschleuniger (VIII) aus der Gruppe ausgewählt ist, die aus den organischen Zinnverbindungen Dibutylzinndilaurat und Zinnoctoat und den Metallnaphthenaten Zinnaphthenat und Kobaltnaphthenat besteht.

12. Faserverstärktes Kunststoff (FRP)-Material enthaltend eine Verstärkungsfaser, die mit einer Harzmasse nach Anspruch 9 imprägniert ist.

13. Harzmasse nach Anspruch 1, worin das Verhältnis der Mischung aus (I), (II) und (III) zu der Mischung aus (IV), (V) und (VI), auf das Gewicht bezogen, 97—3/3—97 beträgt.

14. Harzmasse nach Anspruch 9, worin das Verhältnis der Mischung aus (I), (II) und (III) zu der Mischung aus (IV), (V) und (VI), auf das Gewicht bezogen, 97—3/3—97 beträgt.

15. Harzmasse nach Anspruch 9, worin die Menge an (VII) bezogen auf die Gesamtmenge an (I) bis (VI) solchermaßen ist, daß das Verhältnis der funktionellen Gruppen OH/NCO 1/0,1—1 beträgt.

16. Faserverstärktes Kunststoff (FRP)-Material nach Anspruch 8, worin die Verstärkungsfaser aus der Gruppe ausgewählt ist, die aus anorganischen Fasern, eingeschlossen Glasfasern, Aluminiumoxidfasern, Siliziumcarbidfasern, Borfasern und Kohlenstoffasern und organischen Fasern, eingeschlossen Polyesterfasern und Polyaramidfasern besteht.

17. Formgegenstand hergestellt durch thermische Härtung des faserverstärkten Kunststoff (FRO)-Materials nach Anspruch 8.

18. Formgegenstand hergestellt durch thermische Härtung des faserverstärkten Kunststoff (FRP)-Materials nach Anspruch 16.

19. Harzmasse nach Anspruch 7, worin der Bestandteil (I) ein Polyester aus Maleinsäureanhydrid, Phthalsäureanhydrid und Diethylenglykol, der Bestandteil (II) Diallylphthalat und der Bestandteil (IV) ein Bisphenol A-diglycidyletherpoxyharz sind.

20. Harzmasse nach Anspruch 7, worin der Bestandteil (I) ein Reaktionsprodukt aus einem Bisphenol A-diglycidyletherepoxyharz und Methacrylsäure, der Bestandteil (II) Styrol und der Bestandteil (IV) ein Bisphenol A-diglycidylether epoxyharz sind.

**Revendications**

1. Une composition de résine dont les composants formateurs de résine comprennent (I) au moins un composé choisi dans le groupe formé par (A) les polyesters insaturés contenant des groupes hydroxyle qui sont des polyesters d'un composant acide dicarboxylique et d'un composant glycol où au moins une partie du composant acide dicarboxylique est un acide dicarboxylique insaturé, et (B) les produits de réaction de polyépoxydes et d'acides carboxyliques éthyléniquement insaturés en un rapport de 1:0,5 à 1:1,1 des groupes époxy aus groupes acides carboxyliques, obtenus en utilisant LiCl comme catalyseur de réaction; (II) au moins un monomère copolymérisable avec ledit composé (I), qui est choisi dans le groupe formé par les monomères éthyléniquement insaturés et les monomères allyliques insaturés; (III) un catalyseur du type peroxyde pour la copolymérisation des composés (I) et (II); (IV) au moins un composé contenant au moins un cycle oxyranique; (V) un agent durcisseau (à 'exception des anhydrides d'acides, acides et amines) capable de durcir ledit composé oxyranique (IV), choisi dans le groupe formé par les guanidines, telles que le dicyandiaminde, le 2,6-xylénylbiguandide, le o-tolylbiguanide et la diphénylguanidine, et les dihydrazides, tels que le dihydrazide d'adipyle et le dihydrazide d'azélayle; et (VI) un catalyseur capable de favoriser le durcissement des composés (IV) et l'activité de l'agent durcisseur, choisi parmi les produits de réaction de diméthylamine et d'isocyanates de phényle.

2. Une composition de résine selon la revendication 1, dans laquelle la composition de résine contient comme composant (I) le composé (A) qui est un polyester d'acide maléique et d'acide phtalique.

3. Une composition de résine selon la revendication 1, dans laquelle la composition de résine contient comme composant (I) le composé (B) qui est un produit de réaction formé entre l'acide méthacrylique, l'acide acrylique ou l'acide crotonique et un composé choisi dans le groupe formé par les éthers polyglycidyliques de diphénylolalcanes et de polyphénols, les éthers polyglycidyliques de p-aminophénol, de m-aminophénol et de polyamines, et les époxydes de composés cycloaliphatiques.

4. Une composition de résine selon la revendication 1, dans laquelle le composant (II) est un composé choisi dans le groupe formé par les composés styréniques, les acrylates, les méthacrylates et les esters d'allyle.

5. Une composition de résine selon la revendication 1, dans laquelle le composant (III) est un composé choisi dans le groupe formé par les peroxydes qui sont actifs aux températures moyennes à élevées.

6. Une composition de résine selon la revendication 1, dans laquelle le composant (IV) est un composé choisi dans le groupe formé par les éthers polyglydicyliques de diphénylolalcanes, de polyphénols et de polyamines, les époxydes de composé cycloaliphatiques et les monoépoxydes qui sont l'oxyde de styrène, l'éther de butyle et de glycidyle et l'éther d'allyle et de glycidyle.

7. Une composition de résine selon la revendication 1, dans laquelle le composant (VI) est un composé choisi dans le groupe formé par les produits de réaction de diméthylamine et d'isocyanates de phényle.

8. Une matière plastique renforcée par des fibres (PRF) comprenant une fibre de renforcement imprégnée par une composition de résine selon la revendication 1.

9. Une composition de résine selon la revendication 1, qui contient un polyisocyanate (VII) et un promoteur (VIII) de la réaction entre le groupe isocyanate et le groupe hydroxyle.

10. Une composition de résine selon la revendication 9, dans laquelle le polyisocyanate (VII) est choisi dans le groupe formé par les polyisocyanates aromatiques et aliphatiques, le 4,4'-diisocyanate de diphénylméthane, le 2,4-diisocyanate de toluène, le 2,6-diisocyanate de toluène, le diisocyanate d'hexaméthylène, le diisocyanate de m-xylylène et les isocyanates de polyméthylèynepolyphényle.

11. Une composition de résine selon la revendication 9, dans laquelle le promoteur (VIII) est choisi dans le groupe formé par le dilaurate de dibutylétain et l'octoate d'étain comme composés organiques d'étain, et le naphténate d'étain et le naphténate de cobalt comme naphténates de métaux.

12. Une matière PRF comprenant une fibre de renforcement imprégnée par une compositon de résine selon la revendication 9.

13. Une composition de résine selon la revendication 1, dans laquelle le rapport du mélange de (I), (II) et (III) au mélange de (IV), (V) et (VI) est de 97—3/3—97 en poids.

14. Une composition de résine selon la revendication 9, dans laquelle le rapport du mélange de (I), (II) et (III) au mélange de (IV), (V) et (VI) est de 97—3/3—97 en poids.

15. Une composition de résine selon la revendication 9, dans laquelle la quantité de (VII) par rapport à la quantité totale de (I) à (VI) est telle que le rapport de groupes fonctionnels OH/NCO soit de 1/0,1—1.

16. Une matière PRF selon la revendication 8, dans laquelle la fibre de renforcement est choisie dans le groupe formé par les fibres minérales incluant la fibre de verre, la fibre d'alumine, la fibre de carbure de silicium, la fibre de bore et la fibre de carbone, et par les fibres organiques incluant la fibre de polyester et la fibre de polyaramide.

17. Une produit moulé fabriqué par le durcissement thermique de la matière PRF selon la revendication 8.

18. Un produit moulé fabriqué par le durcissement thermique de la matière PRF selon la revendication 16.

19. Une composition de résine selon la revendication 7, dans laquelle le composant (I) est un polyester d'anhydride maléique, d'anhydride phtalique et de diéthylène-glycol, le composant (II) est le phtalate de diallyle, et le composant (IV) est une résine époxyde d'éther diglycidylique de bisphénol A.

20. Une composition de résine selon la revendication 7, dans laquelle le composant (I) est un produit de réaction d'une résine époxyde d'éther diglycidylique de bisphénol A et d'acide méthacrylique, le composant (II) est le styrène et le composant (IV) est une résine époxyde d'éther diglycidylique de bisphénol A.

FIG.1

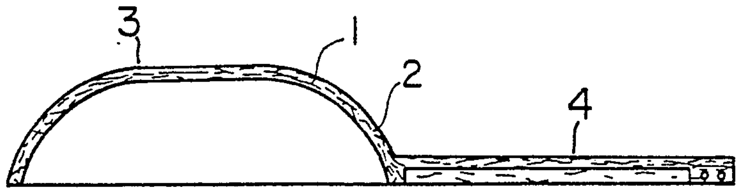


FIG.2

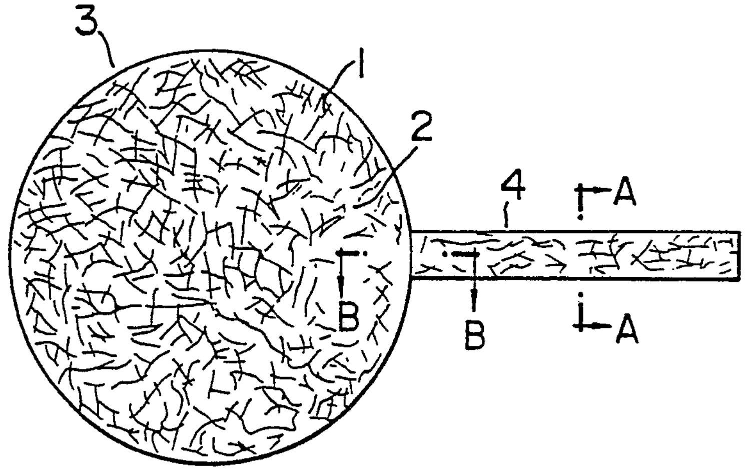


FIG.3

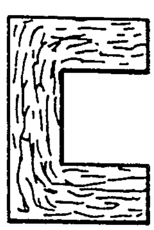

FIG.4

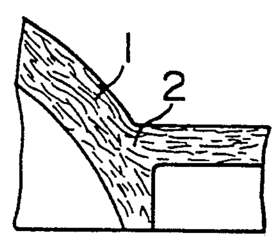

FIG. 5

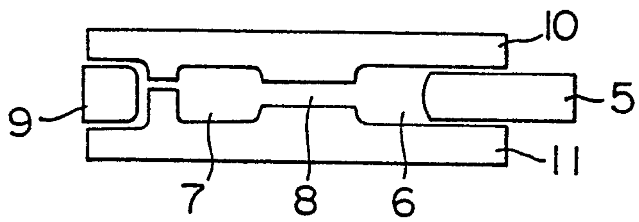


FIG. 6

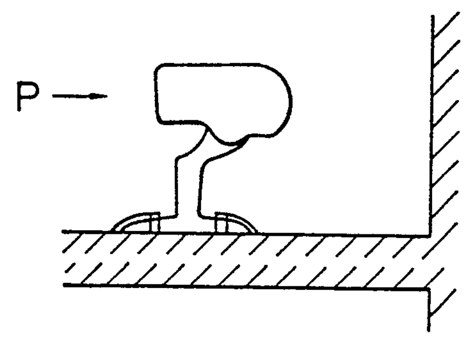


FIG. 7

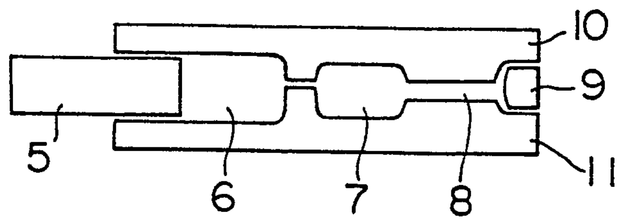

FIG. 8

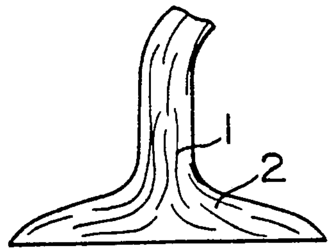


FIG. 9